# EUROPEAN PATENT APPLICATION

(11) **EP 4 616 697 A1**
(43) Date of publication of application: **17.09.2025**
(21) Application number: 25162730.3
(22) Date of filing: 10.03.2025
(51) Int. Cl.: A01D 41/127

(54) **CROP LOSS MONITORING**

(30) Priority: 11.03.2024 US 202463563519 P
(71) Applicant: Precision Planting LLC, Tremont, IL 61568 (US)
(72) Inventor: Hildebrand, William Kurt, Tremont, 61568 (US); Brunet Avalos, Maria Nieves, Tremont, 61568 (US); Bitting, Austin, Tremont, 61568 (US); Harness, Andrew William, Tremont, 61568 (US); Bridges, Greg E, Tremont, 61568 (US)
(74) Representative: AGCO Intellectual Property Department

(57) **Abstract**

Systems and methods are provided for monitoring crop loss associated with a header arrangement operably couplable to an agricultural harvesting machine. A sensor response is received from a sensing element of a sensor arrangement provided as part of or otherwise associated with a sample unit, the sensor response being dependent on material constituents present within the sample unit, and where the sample unit is operably coupled to one or more functional components of the header arrangement. A measure of crop constituents provided by the sample unit is determined based on the sensor response and used to determine a loss metric for an agricultural operation performed by the header arrangement. Operation of one or more operable components of or otherwise associated with the header arrangement and/or the agricultural harvesting machine is then controlled in dependence on the determined loss metric.

## Description

### CROSS-REFERENCE TO RELATED APPLICATIONS

Not applicable.

### FIELD

Embodiments of the present disclosure relate generally to systems and methods for monitoring crop loss associated with an agricultural harvesting operation.

### BACKGROUND

In agricultural operations, such as harvesting of corn and the like, it is possible and indeed important to control multiple parameters to maximize the efficiency of the process and reduce losses experienced due to incorrect or inappropriate operating conditions. For instance, harvesting performance can depend on a distance between skid plates in row units, cutting/chain speed in row units and forward speed of the machine. Small changes in these parameters can significantly increase grain loss due to crop or constituents thereof (e.g. cobs, kernels, etc.) being thrown out of the header arrangement or crushed. Widths of headers for said machines can be up to and in some instances exceed 10m. Accordingly, it is unrealistic for the operator alone to continuously supervise the full header (or parts thereof) whilst simultaneously attending numerous other tasks such as machine parameter adjustment, on the go un-loading, etc. Furthermore, given such tasks often take place over extended periods, e.g. all day, operator fatigue additionally reduces the operator awareness and reaction time. Accordingly, systems which reply on operator monitoring of the header performance can experience significant issues in terms of losses.

It would therefore be advantageous to provide means to assist an operator of such machines in monitoring operation of the header arrangements thereof to minimize or at least reduce losses associated with the operation.

### BRIEF SUMMARY

In an aspect of the invention there is provided a loss monitoring system for a header arrangement operably couplable to an agricultural harvesting machine, the loss monitoring system comprising: a sample unit operably coupleable, in use, to one or more functional components of the header arrangement and configured for obtaining a crop material sample; a sensor arrangement comprising at least a sensing element, provided as part of or otherwise associated with the sample unit and configured, in use, to provide a sensor response which is dependent upon material constituents present within the sample unit; and a control system comprising one or more controllers being collectively configured to: receive sensor data from the sensor arrangement; process the sensor data to: determine a measure of crop constituents provided by the sample unit; and determine a loss metric for an agricultural operation performed by the header arrangement in dependence on the crop constituent measure; and generate and output one or more control signals for controlling operation of one or more operable components of or otherwise associated with the header arrangement and/or the agricultural harvesting machine in dependence on the determined loss metric.

Advantageously, the loss monitoring system is configured to utilise a sample unit for collecting a sample of crop constituents associated with a header arrangement. By positioning the sample unit in a suitable position, e.g. below one or more crop engaging components of the header arrangements, the loss monitoring system may be configured to directly measure a loss metric during performance of a harvesting operation, e.g. without requiring the operator to stop the machine and inspect a ground area for crop constituents on the ground. The sample unit may provide a control measure for obtaining a repeatable sample representative of a given crop constituent, e.g. a grain or kernel sample, which may be comparable over time.

The one or more controllers may collectively comprise an input (e.g. an electronic input) for receiving one or more input signals. The one or more input signals may comprise data indicative of the sensor data from the sensor arrangement. The one or more controllers may collectively comprise one or more processors (e.g. electronic processors) operable to execute computer readable instructions for controlling operation of the control system, for example, to process the sensor data to: determine the measure of crop constituents provided by the sample unit; and/ or determine the loss metric. The one or more processors may be operable to generate one or more control signals for controlling operation of the one or more operable components. The one or more controllers may collectively comprise an output (e.g. an electronic output) for outputting the one or more control signals.

The sample unit may comprise a receptacle. The receptacle may define a volume into which one or more crop constituents may fall or otherwise be collected by the sample unit. The receptacle may be configured to prevent unwanted crop constituents entering the volume. For example, the receptacle may define an opening sized to only allow given crop constituents (e.g. grains, kernels or the like) to enter the volume.

The sample unit may comprise a receptacle having an open side wall defining an opening for crop constituents. In such embodiments, the receptacle may be configured to act as a scoop to collect crop constituents, e.g. constituents lying on a surface of the header arrangement.

In other embodiments, the sample unit may comprise a contact surface which is configured to contact with crop constituents in its path and move said crop constituents upon movement of the associated functional component of the header arrangement. This may comprise a sweeper arrangement such as a brush or arm arrangement for contacting said crop constituents.

The sensing element may form part of the sample unit. For instance, where the sample unit comprises a receptacle, the sensing element may form at least part of one or more surfaces of the receptacle. For instance, in some embodiments the sensing element forms at least part of a lower surface or base of the receptacle. In this way, crop constituents held by the receptacle may be directly in contact with the sensing element when held by the receptacle. The sensing element may form at least part of a side wall of the receptacle.

In some embodiments, the sensing element is provided coupled to or otherwise associated with a fixed or stationary component of the header arrangement. In such embodiments, the sample unit may be arranged such that it obtains and/or moves the sample to the position of the sensing element, in use. This may be provided through coupling or otherwise associating the sample unit with a moveable functional component of the header arrangement and having the sensor arrangement and specifically the sensing element thereof coupled to or otherwise associated with a fixed or stationary component proximal to or adjacent to the path of that moveable component. The sensor response from the sensing element may be measured as the sample unit passes the sensing element for obtaining the crop constituent measure.

The sensing element may comprise an antenna, which may include a coil or interdigitated patch. The sensor arrangement may comprise a reader component. The reader component may be configured to generate an interrogation signal. A sensor response of the sensing element to the interrogation signal may be indicative of one or more characteristics of the crop constituent(s) present within or otherwise collected by the sample unit.

The one or more controllers may be configured to process the sensor response for determining the loss metric. Processing of the sensor response may comprise analysing one or more signal properties of the sensor response. The one or more signal properties may include an amplitude of the sensor response. The amplitude may be proportional to the volume or number of individual crop constituents present within or otherwise provided by the sample unit to the sensing element. The one or more signal properties may comprise a frequency of the sensor response. This may include analysing a frequency shift of the sensor response, which may be proportional to the volume or number of individual crop constituents present within or otherwise provided by the sample unit to the sensing element.

The loss metric may quantify a crop loss associated with the agricultural harvesting machine. This may comprise a count of individual crop constituents identified in the sensor data. The count may be used to determine a loss rate for the harvesting machine and/or header arrangement.

The sample unit is operably coupleable, in use, to one or more functional components of the header arrangement. The one or more functional components may include moveable components of the header arrangement. This may include a reel of the header arrangement, a gathering chain of the header arrangement, a paddle provided as part of the gathering chain, or the like.

The sample unit may be operably coupleable to the functional component such that it is positioned at least partly below a crop engaging component of the header arrangement. In this way, crop material falling from the crop engaging component, e.g. which might otherwise end up falling onto the ground, may be collected by the sample unit. The crop engaging component may comprise a row unit, for example.

The one or more operable components may comprise one or more functional components of the header arrangement. This may include a skid plate, row unit, auger, conveyor, or the like. The one or more controllers may be operable to control one or more functions of said functional components, which may comprise the operation of the component(s), an operational speed of said component(s), a relative position of features of the component(s) or the like. For example, the one or more controllers may be configured to control a spacing of skid plates or row units of the header arrangement, or an operational speed, e.g. rotational speed of the component(s). The one or more controllers may be operable to control a cutting speed or chain speed associated with one or more row units of the header arrangement.

The one or more operable components may comprise one or more functional components of the agricultural machine. This may include a steering and/or propulsion system of the agricultural machine for controlling motion of the machine in dependence on the determined loss metric. In some embodiments, the control system may be operable to control a propulsion and/or braking system of the agricultural machine for controlling a forward speed of the machine in dependence on the determined loss metric.

The one or more operable components may comprise a user interface of or otherwise associated with the agricultural machine. The user interface may, for example, comprise a display terminal or the like of the machine, such as a display screen in an operator cab of the machine. The user interface may instead be provided on a remote device, e.g. a tablet computer or the like operably connected to the agricultural machine. The control system may be operable to control operation of the user interface for displaying or otherwise providing information indicative of the determined loss metric to an operator of the machine.

The sample unit may be configured such that, following the obtaining of the crop constituent measure, crop constituents within or otherwise interacted by the sample unit are released therefrom. For instance, where the sample unit comprises a receptacle, an opening may be provided in the receptacle to release the gathered crop material, e.g. onto the ground. Where the sample unit comprises a contact surface, the movement of the surface past the sensor arrangement may be such that the material is then pushed or otherwise moved to a location where it can drop from the header arrangement, e.g. onto the ground. This may include moving the crop material to a position corresponding to a gap or opening in a component of the header for the crop material to fall therethrough.

In embodiments, the crop constituent(s) comprise corn kernels. The agricultural machine may comprise a harvesting machine, such as a corn harvester. The header arrangement may comprise a header connected or mountable to the agricultural harvesting machine, such as a corn header for a corn harvester.

According to a further aspect of the invention there is provided a header arrangement for a harvesting machine comprising the loss monitoring system as described herein.

The header arrangement may be provided with the one or more sample units operably coupled to a functional component of the header arrangement, e.g. via suitable connection means or within an integrated housing present in the header arrangement; and a sensing element provided as part of or otherwise associated with a respective sample unit.

A further aspect of the invention provides an agricultural machine comprising or being operably coupleable to the header arrangement and/or the loss monitoring system of any preceding aspect.

The agricultural machine may comprise a harvesting machine, such as a combine harvester or forage harvester.

According to a further aspect of the invention there is provided a method of monitoring crop loss associated with a header arrangement operably couplable to an agricultural harvesting machine, the method comprising: receiving, from a sensor arrangement which includes a sensing element provided as part of or otherwise associated with a sample unit, a sensor response which is dependent on material constituents present within the sample unit, the sample unit being operably coupled to one or more functional components of the header arrangement; determining a measure of crop constituents provided by the sample unit in dependence on the sensor response; determining a loss metric for an agricultural operation performed by the header arrangement in dependence on the crop constituent measure; and controlling operation of one or more operable components of or otherwise associated with the header arrangement and/or the agricultural harvesting machine in dependence on the determined loss metric.

The method of the present aspect of the invention may comprise performance of any one or more of the functional features of the one or more controllers of the loss monitoring system of a preceding aspect discussed herein.

A further aspect of the invention comprises computer software which, when executed by one or more processors, causes performance of the method of the preceding aspect of the invention.

An aspect of the invention provides a computer readable storage medium comprising the computer software of the preceding aspect of the invention.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating a combine harvester embodying aspects of the present disclosure;
FIG. 2 is a schematic perspective view of a corn header;
FIG. 3 is a schematic diagram illustrating an embodiment of a loss monitoring system of the present disclosure;
FIGs 4 and 5 illustrate a first embodiment of a loss monitoring system of the present disclosure, in use;
FIG. 6 illustrates a second embodiment of a loss monitoring system of the present disclosure; and
FIG. 7 is experimental data illustrating the functionality of aspects of the present disclosure.

### DETAILED DESCRIPTION

Systems and methods are provided for monitoring operation of an agricultural machine (e.g. a harvester 10) performing an agricultural operation (e.g. a harvesting operation) in a working environment such as a field, and specifically for monitoring crop loss associated with a header arrangement 16 (referred to interchangeably as a header 16) operably coupled to the harvester 10. Sensor data from a sensor arrangement (here, in a first embodiment) comprising a sensing element 25 and a reader component 29) mounted on or otherwise provided as part of the header 16 is obtained and used to monitor operation of the header 16 in the manner discussed herein.

Specifically, sensor data from the sensor arrangement is used determine a crop loss metric associated with the header 16. The crop loss metric can include a count or rate of individual or specific crop constituents falling through the header 16 which would otherwise be lost to the ground, for example. Crop constituents may include, in an example, corn kernels or the like. One or more operable components associated with the harvester 10 and/or the header arrangement 16 can then be controlled in dependence on the determined loss metric. The operable component(s) may include functional components of the header 16, a user interface 32 associated with the harvester 10 and/or operation of the harvester 10 itself, e.g. through control over a propulsion, braking and/or steering system of the harvester 10 in the manner described hereinbelow.

### Harvester

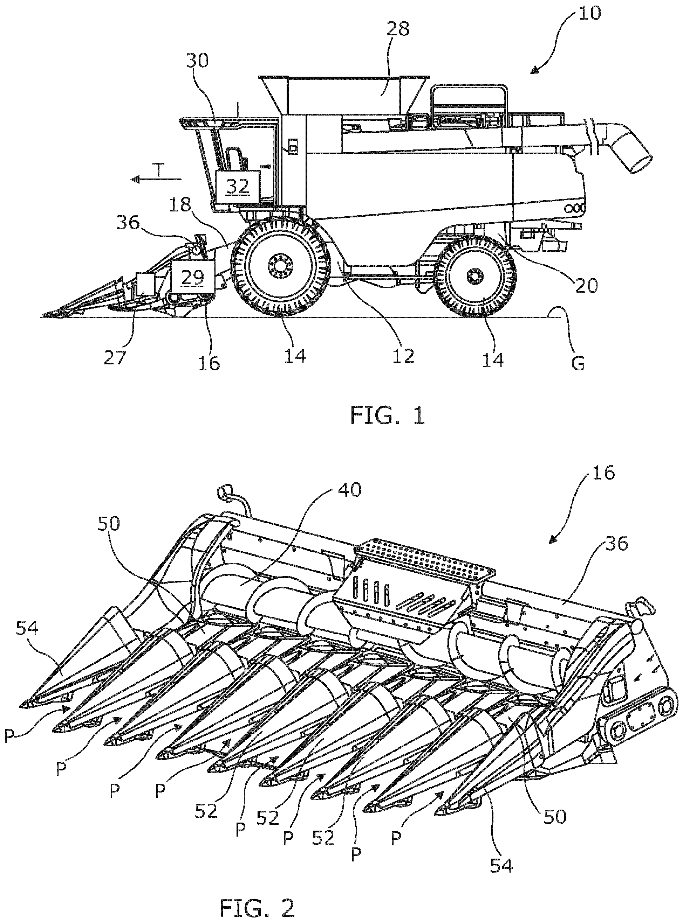

FIG. 1 illustrates an agricultural harvester 10, which includes a chassis 12 supported and propelled along the ground G by ground-engaging wheels 14. Although the harvester 10 is illustrated as being supported and propelled on ground-engaging wheels 14, the harvester 10 can also be supported and propelled by full tracks or half tracks. A harvesting header 16 carried by the chassis 12 is used to gather crop and to conduct the crop material to a feederhouse 18 and then to a beater in the harvester 10. The beater guides the crop upward to a threshing and separating system 20, which is configured to separate grain from material other than grain (MOG) and deliver the grain to a grain tank 28 carried by the harvester 10. The operation of the harvester 10 is controlled from an operator cab 30. A user interface 32 is provided within the operator cab 30 for displaying or otherwise providing information to an operator of the harvester 10 data indicative of the operation of the harvester 10 or other associated components, e.g. the header 16. The header 16 is additionally provided with a loss monitoring system as described herein, which includes a sensor arrangement and a sample unit 27. The sample unit 27 is configured for collecting or otherwise interacting with a sample of crop material for inspection by the sensor arrangement. In the illustrated embodiment, the sample unit comprises a receptacle 27 operably coupled to a gathering chain of the header 16 such that it is moveable, in use, with the chain. The sensor arrangement in turn, comprises a sensing element 25, here provided as part of the sample unit 27 and specifically forming part of the base of the sample unit 27, and a reader component 29 for interrogating the sensing element 25 for obtaining a sensor response therefrom. As described herein, the sensor response from the sensing element 25 is representative of crop constituents within the receptacle 27, thereby providing a measure of crop loss associated with the header.

FIG. 2 is a simplified perspective view of the harvesting header 16, which is a corn header. The illustrated corn header includes a header frame 36 carrying an auger 40 and eight row units 50. The row units 50 are separated by seven row dividers 52 and surrounded by end dividers 54. Ears of corn are stripped from each of eight crop rows planted along row paths P by the row units 50 and then carried by the auger 40 toward the feederhouse 18 of the harvester 10. Gathering chains 51 are provided with paddles 53 thereon for each row unit 50 for urging the crop material towards the auger 40. Harvesting corn in a harvester 10 is described generally in U.S. Patent 9,322,629, "Stalk Sensor Apparatus, Systems, and Methods," issued April 26, 2016.

### Loss Monitoring System

As discussed herein, a control system 100 is provided and configured to controlling operation of one or more operable components (e.g. header control unit 120, harvester control unit 130, and/or user interface 32) associated with the harvester 10. In the illustrated embodiment the controllable components include a header control unit 120 for controlling functional features of the header 16, a harvester control unit 130 for controlling operational parameters of the harvester 10, e.g. a forward speed or path, and the user interface 32, here provided as a display terminal provided within the operator cab 30 of the harvester 10, and is utilised to provide an indication of the operation of the control system 100 and/or to receive one or more operator inputs for controlling operation of the control system 100 or associated components in the manner described herein.

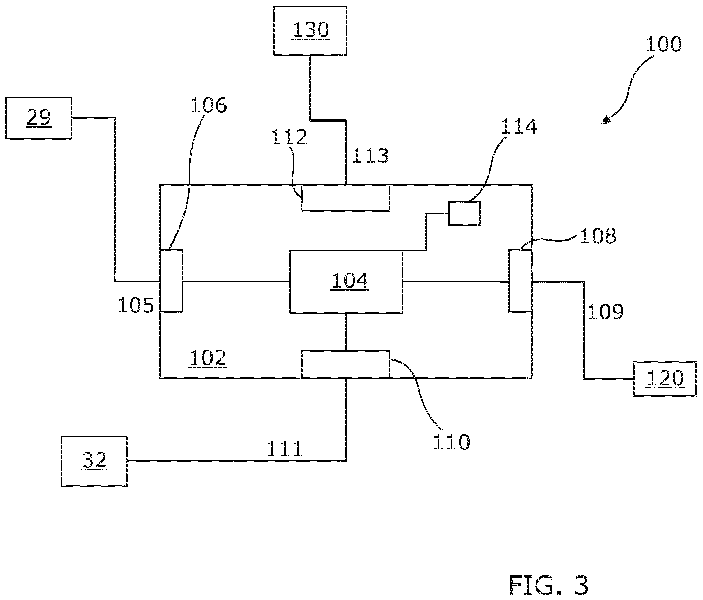

FIG 3 illustrates the control system 100 further. As shown, control system 100 comprises a controller 102 having an electronic processor 104, electronic input 106 electronic outputs 108, 112 and electronic input/output 110. The processor 104 is operable to access a memory 114 of the controller 102 and execute instructions stored therein to perform the steps and functionality of the present invention discussed herein, e.g. by controlling operation of functional components of the header 16 in dependence on a loss metric as determined by the control system 100, and/or controlling the user interface 32 to display information indicative of determined loss metric and/or to receive an operator input for initiating control actions based on the determined loss metric, through generation and output of one or more control signals.

The processor 104 is operable to receive via input 106 which, in the illustrated embodiment, takes the form of input signals 105 received from a control unit associated with the sensor arrangement. Specifically, the processor 104 is configured to analyse the sensor data and determine therefrom a crop loss metric in the manner discussed herein, e.g. through analysis of the sensor response of the sensing element 25 dependent upon the crop constituent content carried by the receptacle 27. Here, this comprises an analysis of one or more signal properties of the sensor response. The signal property(ies) include an amplitude of the sensor response, and/or a frequency of the sensor response, including a measure of a relative change in said signal property(ies) due to the presence (or absence) of crop material in the sample unit 27. A relative measure of crop material in the receptacle 27 may provide a comparable value for crop loss at different times and/or during different operating scenarios and settings.

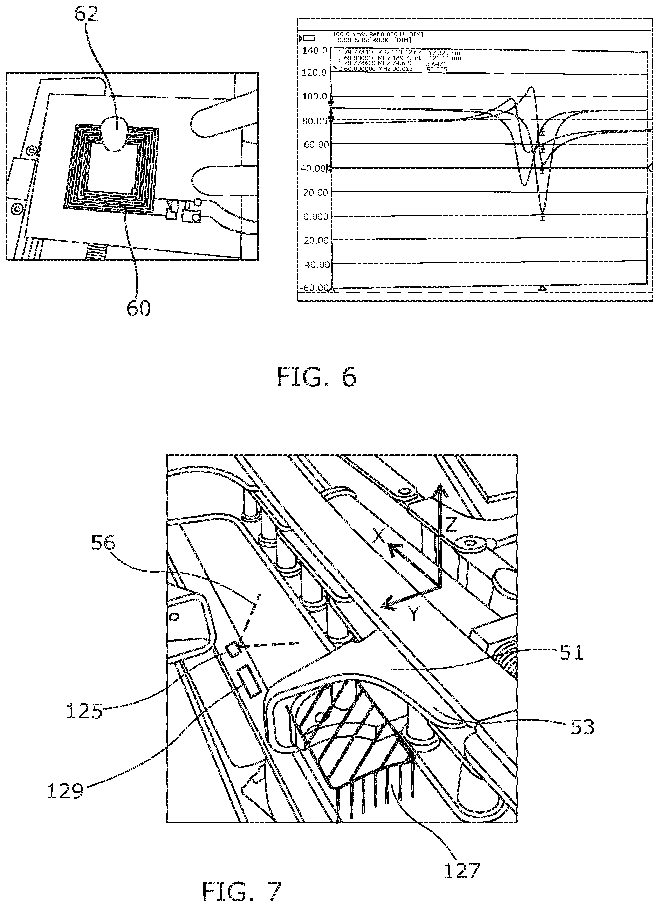

A representative signal response for the sensing element 25 is shown in FIG. 6 alongside an experimental setup. Here, a corn kernel 62 is provided on an antenna 60 providing the sensing element in the setup. On the right hand side of the figure the signal response is shown, with the control signals in yellow illustrating the sensor response where no crop material is present proximal to the antenna 60, and the corresponding waveform in blue where crop kernel 62 is placed proximal to the antenna 60. This demonstrates a measurable variation in both an amplitude and frequency of the sensor response in the presence of crop material (compared with the control).

The loss metric quantifies a crop loss associated with the harvester 10. Here, this can include a count of individual crop constituents of interest identified in the receptacle 27 for each measurement. This can be used as an indicator of individual crop grains / kernels which are falling through the header 16 and would subsequently fall onto the ground, thereby being related to a crop loss or loss rate associated with the harvesting operation with suitable calibration.

As described above, the controller 102 includes an electronic output 108 configured to output control signals 109 generated by the processor 104 for controlling operation of one or more operable components associated with the header 16. Specifically, in the illustrated embodiment, the processor 104 is operable to generate, and the controller 102 operable then to output via output 108, control signals 109 to local control unit 120 of the header 16 for controlling operable parameters thereof in dependence on the determined loss metric. In practice, this may include adjusting an operation of operable components of the header 16, an operational speed of said component(s) and a relative position of the component(s). This can include a cutting speed or chain speed of one or more of the row units 50, and/or a separation distance between adjacent row units 50. This may be at least partly automated in dependence on the determined loss metric or may require a user input to enact those changes, e.g. through interaction with the user interface 32.

Controller 102 additionally includes an electronic output 112 for outputting control signals 113 to a control unit 130 associated with the harvester 10. In turn, said control unit 130 may be operable to control operation of one or more of a steering system, braking system and/or propulsion system of the harvester 10 for controlling motion of the harvester 10 in dependence on the loss metric determined in the manner described herein. In practice, this may include control over a forward speed and/or operational path for the harvester 10. For instance, where a relatively high loss is identified, the forward speed of the harvester 10 may be reduced.

Input/output 110 is operably connected to user interface 32. The control system 100 is operable to control operation of the user interface 32, e.g. through output of control signals 111 in order to display data to an operator of the harvester 10 indicative of the loss metric, as determined by processor 104. This can include simply providing an indication to the operator of the determined loss metric, e.g. the determined ground loss, or prompt the operator to initiate one or more actions for reducing or minimizing the ground loss. In response to an operator input, further actions may be taken by the control system 100 according to the input, e.g. for controlling operation of the harvester 10 and/or header 16 specifically via local control units 120, 130. For this purpose, the input/output 110 is additionally configured to receive input signals 111 from the user interface 32 indicative of an operator input at the user interface 32.

### Receptacle Embodiment

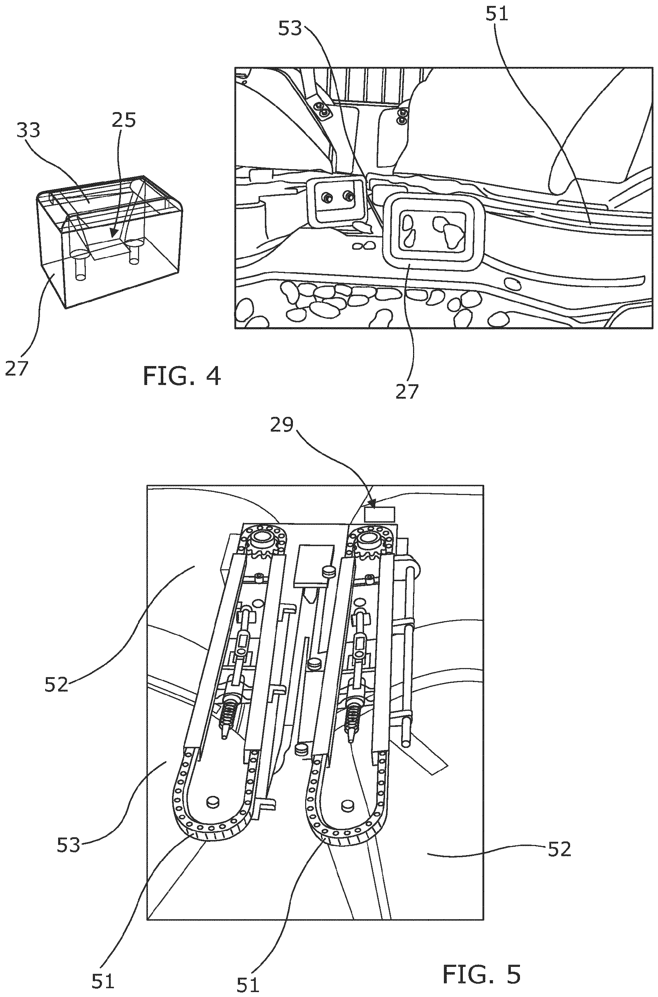

The first embodiment of the loss monitoring system is shown in further detail in FIGs 4 and 5.

Here, the sample unit is provided as a receptacle 27 defining a volume in which crop material may be held, in use. Specifically, the receptacle 27 has an open end defining an opening 33 into which crop material can pass, in use, and enter the receptacle. As discussed, the receptacle may be configured to prevent unwanted crop constituents entering the volume. For instance, the opening 33 may be sized to only allow given crop constituents (e.g. grains, kernels or the like) to enter the volume. A base or specifically here a sidewall of the receptacle 27 is defined by the sensing element 25 of the sensor arrangement such that material present within the receptacle 27 contacts the sensing element 25.

The receptacle 27 itself is mountable, in use, to a functional component of the header 16. Specifically here, and as shown in FIG 4, the receptacle 27 is mounted to a paddle 53 provided on a gathering chain 51 of the header 16. As will be appreciated, the gathering chain is configured to cycle, moving the paddle 53 longitudinally with respect to the orientation of the machine 10, with the main purpose of urging crop material towards further crop engaging components of the header 16. By placing the receptacle in this position, crop constituents falling from the crop material and onto the deck plates 56, or at least a sample thereof may be collected by the receptacle 27 and come into contact or be at least proximal to the sensing element 25. Specifically, the receptacle 27 acts as a scoop by collecting crop material lying atop the deck plate(s) 56 as the gathering chain 51 cycles. In this way, the receptacle is configured to obtain a sample of crop material associated with a header or crop loss - i.e. that material which would otherwise fall through the header 16 and onto the ground below.

Turning now to FIG. 5, continued movement of the receptacle 27 due to the cycling of the gathering chain 51 brings the receptacle and the sensing element 25 specifically into range of a reader component 29 of the sensing arrangement. The reader component 29 includes a receive (Rx) antenna intended to couple to a corresponding transmit (Tx) antenna provided as part of the sensing element 25. As the receptacle 27 passes by the reader component, these Tx/Rx antennas couple, and the generation of an interrogation signal by the reader component 29 induces a signal response from the sensing element 25, that signal response being dependent on the crop material or constituents present within the receptacle 27. As discussed herein, this may be observed as a change in amplitude, frequency, or other signal characteristics of the of the sensor response when compared with an expected or control sensor response. The one or more controllers are configured to interpret this change in signal response as a measure of an amount or volume of crop material in the receptacle, and with suitable calibration relate this to a crop loss metric for the operation. This may be provided as an absolute number, a relative measure compared with other operations, or indeed as an expected or predicted crop loss rate.

### Sweep Embodiment

A second embodiment for the loss monitoring system is shown in FIG. 7.

Here, the sample unit instead comprises a sweep mechanism 127 having a series of brushes which collect a crop material sample sitting atop a deck plate 56 of the header 16. The sweep mechanism 127 itself is operably coupled, in use, again to the paddle 53 of the gathering chain 51 in the same way as the receptacle 27 in the first embodiment. However, here rather than collecting a crop sample in a volume, the crop sample instead is effectively pushed or moved along an upper surface of the deck plate 56 under the action of the sweep mechanism 127 towards a sensing element 125 having a fixed position associated with the deck plate 56. As the crop material sample is pushed over the sensing element 125 a sensor response therefrom changes much in the same way as the sensor response from sensing element 25 of FIG. 4. Again, a reader component 129 is provided and configured to interrogate the sensing element 125 in the same way as sensing element 25 and reader component 29 discussed herein. However, rather than the coupling and uncoupling of the sensing element 125 and reader component 129 due to movement of the sensing element 125, a periodic control of the reader component 129 may be enacted, e.g. dependent on the operational speed of the gathering chain 51 and a frequency at which the relevant paddle 53 passes the location of the sensing element 125. Alternatively, the reader component 129 may be configured to continually monitor the signal response of the sensing element 125, for example, and await variations therein indicative of the passing of a crop sample.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A loss monitoring system for a header arrangement operably couplable to an agricultural harvesting machine, the loss monitoring system comprising:
a sample unit operably coupleable, in use, to one or more functional components of the header arrangement and configured for obtaining a crop material sample;
a sensor arrangement comprising at least a sensing element, provided as part of or otherwise associated with the sample unit and configured, in use, to provide a sensor response which is dependent upon material constituents present within the sample unit; and
a control system comprising one or more controllers being collectively configured to:
receive sensor data from the sensor arrangement;
process the sensor data to:
determine a measure of crop constituents provided by the sample unit; and
determine a loss metric for an agricultural operation performed by the header arrangement in dependence on the crop constituent measure; and
generate and output one or more control signals for controlling operation of one or more operable components of or otherwise associated with the header arrangement and/or the agricultural harvesting machine in dependence on the determined loss metric.

2. A loss monitoring system of claim 1, wherein the sample unit comprises a receptacle, the receptacle defining a volume into which one or more crop constituents may fall or otherwise be collected by the sample unit.

3. A loss monitoring system of claim 1, wherein the sample unit comprises a contact surface which is configured to contact with crop constituents in its path and move said crop constituents upon movement of the associated functional component of the header arrangement.

4. A loss monitoring system of any preceding claim, wherein the sensing element forms part of the sample unit.

5. A loss monitoring system of claim 4, when dependent on claim 2, wherein the sensing element forms at least part of one or more surfaces of the receptacle.

6. A loss monitoring system of claim 1, wherein the sensing element is provided coupled to or otherwise associated with a fixed or stationary component of the header arrangement; and wherein the sample unit is arranged such that it obtains and/or moves the sample to the position of the sensing element, in use.

7. A loss monitoring system of claim 6, wherein the sample unit is couplable or otherwise associated with a moveable functional component of the header arrangement; wherein the sensing element of the sensor arrangement is coupled to or otherwise associated with a fixed or stationary component proximal to or adjacent to the path of the moveable component; and wherein the one or more controllers are configured to measure the sensor response from the sensing element as the sample unit passes the sensing element for obtaining the crop constituent measure.

8. A loss monitoring system of any preceding claim, wherein the sensing element comprises an antenna, and wherein the sensor arrangement comprises a reader component configured to generate an interrogation signal.

9. A loss monitoring system of claim 8, wherein the one or more controllers are configured to analyse the sensor response of the sensing element to the interrogation signal, the sensor response being indicative of one or more characteristics of the crop constituent(s) present within or otherwise collected by the sample unit.

10. A loss monitoring system of any preceding claim, wherein the one or more controllers are configured to process the sensor response by analysing one or more signal properties of the sensor response; wherein the one or more signal properties include one or more of:
an amplitude of the sensor response; and
a frequency of the sensor response; and wherein
the one or more signal properties or a measurable change therein are proportional to a number or volume of crop constituents held or otherwise carried by the sample unit.

11. A loss monitoring system of any preceding claim, wherein the sample unit is operably coupleable, in use, to one or more functional components of the header arrangement; and wherein the one or more functional components include one or more moveable components of the header arrangement.

12. A loss monitoring system of any preceding claim, wherein the sample unit is operably coupleable to the functional component such that it is positioned at least partly below a crop engaging component of the header arrangement.

13. A loss monitoring system of any preceding claim, wherein the one or more operable components controllable by the control system comprise one or more functional components of the header arrangement; and wherein the one or more controllers are operable to control one or more functions of said functional components, including one or more of:
the operation of the component(s);
an operational speed of said component(s); and
a relative position of features of the component(s).

14. A loss monitoring system of any preceding claim, wherein the one or more operable components controllable by the control system comprise one or more functional components of the agricultural machine; and wherein the one or more functional components of the machine comprise a steering and/or propulsion system of the agricultural machine for controlling motion of the machine in dependence on the determined loss metric.

15. A method of monitoring crop loss associated with a header arrangement operably couplable to an agricultural harvesting machine, the method comprising:
receiving, from a sensor arrangement which includes a sensing element provided as part of or otherwise associated with a sample unit, a sensor response which is dependent on material constituents present within the sample unit, the sample unit being operably coupled to one or more functional components of the header arrangement;
determining a measure of crop constituents provided by the sample unit in dependence on the sensor response;
determining a loss metric for an agricultural operation performed by the header arrangement in dependence on the crop constituent measure; and
controlling operation of one or more operable components of or otherwise associated with the header arrangement and/or the agricultural harvesting machine in dependence on the determined loss metric.
